# EUROPEAN PATENT SPECIFICATION

(11) **EP 2 062 750 B1**
(45) Date of publication and mention of the grant of the patent: **26.12.2012**
(21) Application number: 07806159.5
(22) Date of filing: 28.08.2007
(51) Int. Cl.: B60C 11/01

(54) **PNEUMATIC TIRE**
LUFTREIFEN
PNEUMATIQUE

(30) Priority: 28.08.2006 JP 2006230597
(43) Date of publication of application: 27.05.2009
(73) Proprietor: Bridgestone Corporation, Tokyo 104-8340 (JP)
(72) Inventor: ABE, Yasunori, Tokyo 187-8531 (JP)
(74) Representative: Waldren, Robin Michael
(86) International application number: PCT/JP2007/066682
(87) International publication number: WO 2008/026600

(56) References cited:
- DE-A1- 19 853 474
- JP-A- 06 099 703
- JP-A- 10 138 713
- JP-A- 11 151 909
- JP-A- 2005 081 919
- JP-A- 2005 305 258

## Description

### TECHNICAL FIELD

The present invention relates to a pneumatic tire capable of restraining uneven wear.

### RELATED ART

Such a pneumatic tire is know from, for example, JP7149113A, JP7251608A, JP8244412A and JP11151909A, wherein a groove portion extending in the tire circumferential direction is formed in a buttress portion extending inwardly in the tire radial direction from the widthwise end portions of the tread portion. When this pneumatic tire is mounted on a vehicle and its tread surface contacts the ground, the groove portion is deformed to narrow its width by weight of the vehicle, thereby restraining ground contact pressure in a shoulder land portion from locally increasing and then restraining uneven wear such as uneven wear in an edge of the shoulder land portion.

DE19853474 discloses a known pneumatic tire corresponding with the preamble of claim 1. JP2005081919 discloses a pneumatic tire for a heavy load.

### DISCLOSURE OF THE INVENTION

However, in the above-mentioned conventional pneumatic tires, there is a likelihood that the groove portion is crushed by the vehicle weight so that the both ends of the groove portion in the widthwise direction thereof abut each other, thereby not relaxing the ground contact pressure in the shoulder land portion, or that the groove portion opens on the surface of the shoulder land portion at the comparatively early stage when the shoulder land portion still keeps enough height. In the latter case, it is likely not only to unable to relax the ground contact pressure in the shoulder land portion but also to increase uneven wear since the ground contact area is decreased and then the ground contact pressure in the shoulder land portion is further increased.
In other words, it has been difficult to surely restrain uneven wear for a long term.

The present invention has been made in consideration to such circumstances and is directed to provide a pneumatic tire capable of surely restraining uneven wear for a long term.

In order to solve the above-mentioned problems and to achieve this object, a pneumatic tire of the present invention comprises
a carcass toroidally extending between a pair of beads,
a belt layer disposed on an outer side of a crown portion of the carcass in a tire radial direction, and
a tread portion disposed on an outer side of the belt layer in the tire radial direction, a surface of the tread portion being provided with a plurality of main grooves spaced in a tire width direction and extending in a tire circumferential direction to define land portions at least in both end portions of the tread portion in the tire width direction, wherein
a groove portion recessed in the tire width direction is formed along the tire circumferential direction on a buttress portion extending inwardly in the tire radial direction from the widthwise end portion of the tread portion, the groove portion being situated between a first intersecting portion where a first virtual line connecting locations of half depths of plurality of main grooves in the tire width direction as viewed in a width section of the tire intersects with a surface of a tire side, and a second intersecting portion where a second virtual line extending outwardly in the tire width direction from each of both ends of an innermost belt in the tire width direction disposed in an innermost side of the belt layer in the tire radial direction intersects with the surface of the tire side, and
an opening width of the groove portion in the buttress portion is larger than a depth of the groove portion.

The term "groove portion being situated between a first intersecting portion and a second intersecting portion" as used herein means that the whole groove portion including opening edges of the groove portion is formed between the first intersecting portion and the second intersecting portion.

It is noted that the first virtual line is a line which is parallel to a line connecting the widthwise inner edge of the shoulder land portion (the widthwise outer opening edge of the main groove) and the widthwise outer edge thereof and which connects locations of half depths of plurality of main grooves in the tire width direction.

Hereinafter, a third virtual line and a fourth virtual line have similar definition as that of the first virtual line.

The second virtual line is a line extending from widthwise both ends of an innermost belt in parallel to a tire axis.

According to the present invention, since the groove portion is formed in the radially inner side of the first intersecting portion in the buttress portion, the groove portion can be prevented from opening on the surface of the shoulder land portion defined in the both end portions of the tread portion in the tire width direction at the comparatively early stage when the shoulder land portion still keeps enough height.

With regard to the arrangement of the groove portion, the reason why the first intersecting portion is a portion where the first virtual line connecting locations of half depths of plurality of main grooves in the tire width direction intersects with the surface of the buttress portion is as follows. The ground contact pressure in turning, especially the ground contact pressure of the outer side of the shoulder land portion is greatly increased when a vehicle turns. Therefore, in order to surely relax this increase of the ground contact pressure in turning, the groove portion should be formed closer to the tread surface up to the first intersecting portion to have wide opening width in the buttress portion.

In addition, the groove portion is preferably formed between the second intersecting portion and a fourth intersecting portion where a fourth virtual line connecting locations having 1/3 of the depths of the plurality of main grooves from the bottom surfaces of the main grooves along the tire widthwise direction intersects with the surface of the tire side. The reason will be described as follows. A tire is generally replaced when the tread portion of the tire wears up to 1/3 of the depth of the main groove from the bottom surfaces of the main grooves. In case of intending to maintain the effect of relaxing the ground contact pressure until the tire is replaced, rather than to relax the increase of the ground contact pressure in turning, the groove portion is preferably formed in the radially inner side of the fourth intersecting portion.

Furthermore, the first intersecting portion is preferably located on at least a radially outer side of the edge of an outermost belt layer. Because, if the first intersecting portion is located on a radially inner side of the edge of the outermost belt layer, the opening width of the recessed portion of the groove portion is not large enough so that the groove portion is crushed when the tread surface contacts the ground.

On the other hand, since this groove portion is formed in a radially outer side of the second intersecting portion in the buttress portion, when the pneumatic tire is mounted on a vehicle and its tread surface contacts the ground, the groove portion is deformed to narrow its width by the vehicle weight, thereby excellently relaxing the ground contact pressure in the shoulder land portion.

Since the opening width of the groove portion in the buttress portion is larger than the depth of this groove portion, even when the groove portion is crushed by the vehicle weight, it is possible to restrain the widthwise both end portions of the groove portion from abutting each other, and then to surely relax the ground contact pressure in the shoulder land portion.

As explained above, uneven wear can be surely restrained for a long term.

The groove portion may be formed between the second intersecting portion and a third intersecting portion where a third virtual line connecting bottom surfaces of plurality of main grooves in the tire width direction intersects with the surface of the buttress portion.
When the wear amount of the outer edge of the shoulder land portion is more than that of the inner edge of the shoulder land portion, the groove portion having the above-mentioned setting in the buttress portion may open on the surface of the shoulder land portion at the relatively early stage. In order to avoid it and to surely maintain the effect until the tire is replaced, the groove portion is advantageously formed between the second intersecting portion and the third intersecting portion.

The groove portion may have a single arc shape as viewed in a width section of the tire along the tire width direction.

The single arc shape means that a curvature of the single groove portion is constant as viewed in the width section.

In this case, when the groove portion is deformed to narrow its width by the vehicle weight, it is possible to restrain a crack from easily generating in a part of the inner surface of this groove portion due to stress concentration to this part.

The groove portion may be formed across a central portion in the tire radial direction between the first intersecting portion and the second intersecting portion.

In this case, the above-mentioned effect will be surely attained.

An angle formed by the surface of the buttress portion and the surface of the shoulder land portion in the inner side of the pneumatic tire may be within a range between 90 degrees and 120 degrees as viewed in the width section of this tire along the tire width direction.
When the angle is beyond this range, there is a likelihood that the groove portion cannot be deformed to narrow its width by the vehicle weight. Particularly when the angle is smaller than 90 degrees, there is a likelihood that uneven wear is increased since a ground contact area of the shoulder land portion is decreased and ground contact pressure in the shoulder land portion is increased as the shoulder land portion is abraded.

A groove portion formed on one of the buttress portions may have a different shape and/or a different arrangement from that of a groove portion formed in the other buttress portion.
When a tire is mounted on a vehicle, in case the wear amount of the tread surface in the inner side of the vehicle is different from that in the outer side of the vehicle, it is possible to uniformly abrade the tread surface by forming a different shape and/or a different arrangement of the groove portion depending on the wear amount difference rather than by forming the same shape and/or arrangement of the groove portion.

The groove portion may be formed on only one of the buttress portions.

By forming the groove portion in the buttress portion on only one of the shoulder land portions, where wear proceeds faster, it is possible to improve one side uneven wear (an example ofwear, wherein wear in one of the shoulder land portions proceeds faster than that of the other).

The groove portions may be formed intermittently in the tire circumferential direction over an entire circumference of the tire.

In other words, in case the shoulder land portion is comprised of blocks, the groove portions may be discontinuously formed rather than continuously formed in the tire circumferential direction.

A ratio B/A may be within a range between 1/10 and 5/10, where A is the opening width of the groove portion and B is the depth of the groove portion.

When the ratio B/A is less than 1/10, the groove portion may have little effect. On the other hand, when the ratio B/A is more than 5/10, the groove portion may be crushed by heavy loads.

In addition, the ratio B/A is more preferably within a range between 2/10 and 4/10.

According to the present invention, uneven wear can be surely restrained for a long term.

### BRIEF DESCRIPTION OF THE DRAWINGS

Fig. 1 is a cross-sectional view of a pneumatic tire along the tire width direction showing an embodiment according to the present invention.
Fig. 2 is a partially enlarged view of the pneumatic tire shown in Fig. 1.
Fig. 3 is measurement results of uneven wear properties in changing a ratio B/A of a groove portion.

### DESCRIPTION OF REFERENCE NUMERALS

- 10: pneumatic tire
- 11: bead
- 12: carcass
- 12a: crown portion
- 13: belt layer
- 13a: innermost belt
- 14: tread portion
- 14a: both ends of the tread portion in the tire width direction
- 16: buttress portion
- 19: main groove
- 19a: bottom surface of the main groove
- 22: groove portion
- A: opening width
- B: depth
- L1: first virtual line
- L2: second virtual line
- L3: third virtual line
- L4: fourth virtual line
- P1: first intersecting portion
- P2: second intersecting portion
- P3: third intersecting portion
- P4: fourth intersecting portion

### BEST MODE FOR CARRYING OUT THE INVENTION

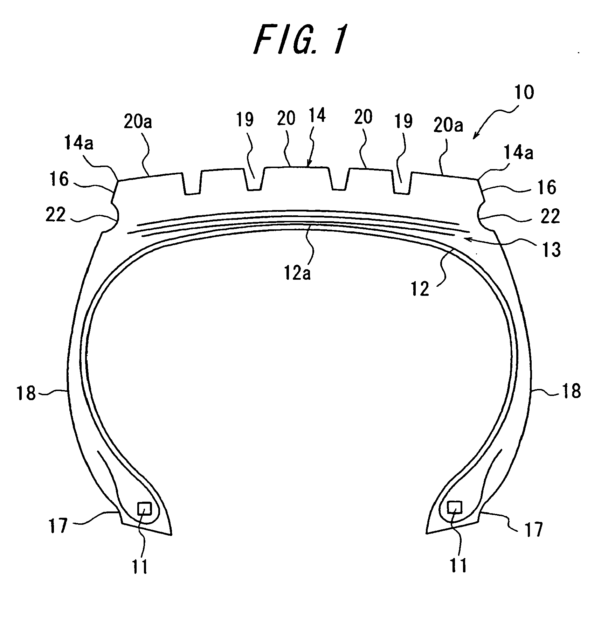

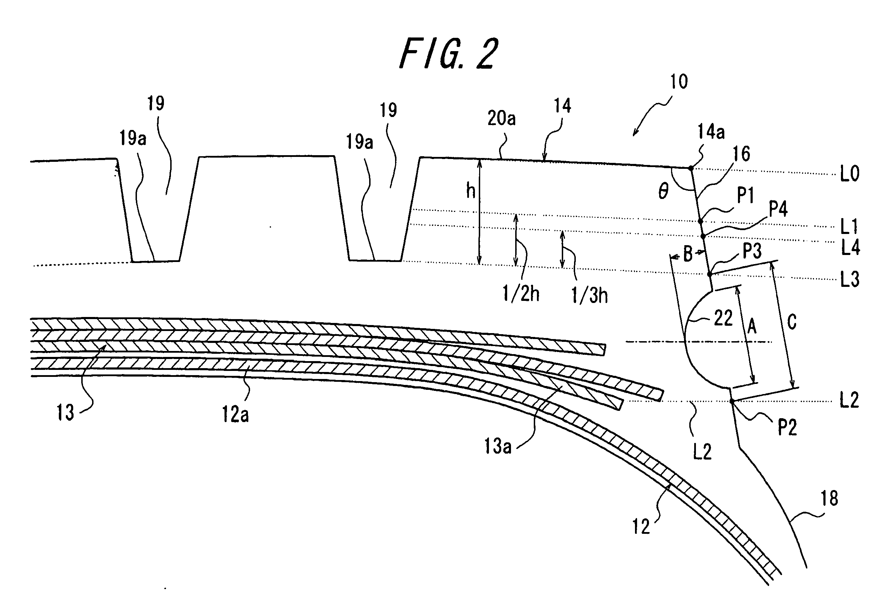

Hereinafter, an embodiment of a pneumatic tire according to the present invention will be described with reference to Figs. 1 and 2.

Fig. 1 is a cross-sectional view of a pneumatic tire 10 along the tire width direction. This pneumatic tire 10 comprises a carcass 12 toroidally extending between a pair of beads 11, a belt layer 13 disposed on an outer side of a crown portion 12a of the carcass 12 in a tire radial direction, and a tread portion 14 disposed on an outer side of the belt layer 13 in the tire radial direction. It is noted that the belt layer 13 consists of a plurality of layers in Fig. 1.

In this embodiment, the pneumatic tire 10 further comprises buttress portions 16 respectively extending inwardly in the tire radial direction from the widthwise end portions 14a of the tread portion 14, bead portions 17 embedded with the beads 11 and side wall portions 18 connecting the buttress portions 16 and the bead portions 17. An angle θ formed by the surface of the buttress portion 16 and the surface of a shoulder land portion 20a in the inner side of the pneumatic tire 10 is within a range between 90 degrees and 120 degrees as viewed in the width section of this tire 10 along the tire width direction.

In addition, a plurality of main grooves 19 spaced in the tire width direction and continuously extending in the tire circumferential direction are formed in the tread portion 14. These main grooves 19 define a plurality of land portions 20 in the tread portion 14. In this embodiment, the main grooves 19 are formed to define land portions 20 respectively in both end portions of the tread portion 14 in the tire width direction. Hereinafter, land portions 20 respectively defined in the both end portions of the tread portion 14 are referred to as shoulder land portions 20a.

In the buttress portion 16 of Fig. 2, a portion where a first virtual line L1 connecting locations of half depths of the plurality of main grooves 19halving the depth h in the tire width direction intersects with the surface of the tire side is referred to as a first intersecting portion P1, a portion where a third virtual line L3 connecting bottom surfaces 19a of the main grooves 19 along the tire widthwise direction intersects with the surface of the tire side is referred to as a third intersecting portion P3 and a portion where a fourth virtual line L4 connecting locations having 1/3 of the depths h of the plurality of main grooves from the bottom surfaces 19a of the main grooves 19 along the tire widthwise direction intersects with the surface of the tire side is referred to as a fourth intersecting portion P4.
The first virtual line L1 is a line parallel to a line L0 connecting the widthwise inner edge of the shoulder land portion 20a (the widthwise outer opening edge of the main groove 19) and the widthwise outer edge 14a thereof and located h/2 away from the line L0.
Similarly, the third virtual line L3 and the fourth virtual line L4 are lines parallel to the line L0 and located h and 2h/3 away from the line L0, respectively.
The second virtual line L2 is a line extending from both ends of an innermost belt 13a in the tire width direction in parallel to a tire axis.
In this embodiment, a groove portion 22 recessed in the tire width direction is formed along the tire circumferential direction on the buttress portion 16 between the first intersecting portion P1 and a second intersecting portion P2 where a second virtual line L2 extending outwardly in the tire width direction from each of both ends of the innermost belt 13a in the tire width direction disposed in the radially innermost side of the belt layer 13 intersects with the surface of the buttress portion 16.
The groove portion 22 is formed more preferably between the third intersecting portion P3 and the second intersecting portion P2 than between the first intersecting portion P1 and the second intersecting portion P2 and even more preferably between the fourth intersecting portion P4 and the second intersecting portion P2.

The opening width A of the groove portion 22 in the buttress portion 16 is larger than the depth B of this groove portion 22. In addition, the depth B of the groove portion 22 is smaller than the width of the shoulder land portion 20a.
In this embodiment, the groove portion 22 has a single arc shape as viewed in the width section of this pneumatic tire 10 along the tire width direction in such a manner that the size of the groove portion 22 in the tire radial direction, that is, the width of the groove portion 22 is gradually narrowed from the surface of the buttress portion 16 toward the radially inner side of the groove portion 22.
The groove portion 22 is formed across a central portion in the tire radial direction between the first intersecting portion P1 and the second intersecting portion P2 in the buttress portion 16. In the example of Fig. 2, the width section of the groove portion 22 has a substantially symmetric shape with reference to the central portion in the tire radial direction between the third intersecting portion P3 and the second intersecting portion P2.

The opening width A of the groove portion 22 is, for example, within a range between 10mm and 11mm. The depth B of the groove portion 22 is, for example, within a range between 3mm and 4mm. In addition, the distance C between the third intersecting portion P3 and the second intersecting portion P2 is, for example, within a range between 13mm and 15mm.

As explained above, according to the pneumatic tire 10 of this embodiment, since the groove portion 22 is formed in the radially inner side of the first intersecting portion P1 in the buttress portion 16, the groove portion 22 can be prevented from opening on the surface of the shoulder land portion 20a at the comparatively early stage when the shoulder land portion 20a still keeps enough height.
On the other hand, since this groove portion 22 is formed in the radially outer side of the second intersecting portion P2 in the buttress portion 16, when the pneumatic tire 10 is mounted on a vehicle and its tread surface 14 contacts the ground, the groove portion 22 is deformed to narrow its width by weight of the vehicle, thereby excellently relaxing the ground contact pressure in the shoulder land portion 20a.

In addition, since the opening width A of the groove portion 22 in the buttress portion 16 is larger than the depth B of this groove portion 22, even when the groove portion 22 is crushed by the vehicle weight, it is possible to restrain the both ends of the groove portion 22 in the widthwise direction thereof from abutting each other, and thus to surely relax the ground contact pressure in the shoulder land portion 20a.
As explained above, it is possible to surely restrain uneven wear for a long term.

In addition, in this embodiment since the groove portion 22 has a single arc shape as viewed in the width section of this pneumatic tire 10 along the tire width direction, when the groove portion 22 is deformed to narrow its width by the vehicle weight, it is possible to restrain a crack from easily generating in a part of the inner surface of this groove portion 22 due to stress concentration to this part.

Since the angle θ formed by the surface of the buttress portion 16 and the surface of the shoulder land portion 20a in the inner side of the pneumatic tire 10 is within a range between 90 degrees and 120 degrees as viewed in the width section of this tire 10 along the tire width direction, the above-mentioned effect is further surely attained.
That is to say, when the angle θ is beyond this range, there is a likelihood that the groove portion 22 cannot be deformed to narrow its width by the vehicle weight. Particularly when the angle θ is smaller than 90 degrees, there is a likelihood that uneven wear is increased since a ground contact area of the shoulder land portion 20a is decreased and ground contact pressure in the shoulder land portion 20a is increased with the progress of wear in the shoulder land portion 20a.

It is noted that a technical scope of the present invention is not limited to the above-mentioned embodiment but various modifications may be added without departing from the scope of the present invention.
For example, the groove portion 22 has a single arc shape as viewed in the width section of this pneumatic tire 10 along the tire width direction in the above-mentioned embodiment. However, the groove portion may be formed by two or more planer surfaces or curved surfaces. Alternatively, the groove portion may be formed by a planar surface in combination with a curved surface. In addition, the groove portion 22 may be formed continuously in the tire circumferential direction over an entire circumference of the tire or may be formed intermittently in the tire circumferential direction over the entire circumference of the tire.

In the above-mentioned embodiment, the groove portion 22 is formed across the central portion in the tire radial direction between the first intersecting portion P 1 and the second intersecting portion P2 in the buttress portion 16 as well as the width section of the groove portion 22 has a substantially symmetric shape with reference to the central portion in the tire radial direction between the third intersecting portion P3 and the second intersecting portion P2. However, the groove portion 22 is not limited to the above-mentioned embodiment if it is formed between the first intersecting portion P1 and the second intersecting portion P2.
In addition, the angle θ formed by the surface of the buttress portion 16 and the surface of the shoulder land portion 20a is within a range between 90 degrees and 120 degrees, however, the angle may be beyond this range.

### EXAMPLE

Next, an examination for verifying the above-mentioned effect is conducted. In this examination, pneumatic tires of Examples 1 and 2 and Comparative Examples 1 to 5 are prepared.

The pneumatic tire of Example 1 has a size of 315/80R22.5, an opening width A of 10mm, a depth B of 3mm (that is, a ratio B/A is 3/10) and a groove portion 22 having a substantially symmetric shape with reference to the central portion in the tire radial direction between the third intersecting portion P3 and the second intersecting portion P2 similar to the above-mentioned embodiment.

The pneumatic tire of Example 2 has a size of 445/50R22.5, an opening width A of 10mm, a depth B of 5mm (that is, a ratio B/A is 5/10) and a groove portion 22 having a substantially symmetric shape with reference to the central portion in the tire radial direction between the third intersecting portion P3 and the second intersecting portion P2 similar to the above-mentioned embodiment.

The pneumatic tire of Comparative Example 1 is similar to the pneumatic tire of Exampl 1 except for a groove portion 22 located in the radially outer side of the first intersecting portion P1 and the pneumatic tire of Comparative Example 2 is similar to the pneumatic tire of Example 1 except for a groove portion 22 located in the radially inner side of the second intersecting portion P2.
The pneumatic tire of Comparative Example 3 is similar to the pneumatic tire of Example 2 except for a groove portion 22 located in the radially outer side of the first intersecting portion P1 and the pneumatic tire of Comparative Example 4 is similar to the pneumatic tire of Example 2 except for a groove portion 22 located in the radially inner side of the second intersecting portion P2.
The pneumatic tire of Comparative Example 5 has an opening width A of 5mm and a depth B of 9mm in the pneumatic tire of Example 1. In addition, the pneumatic tire of Comparative Example 5 has a groove portion 22 having a substantially symmetric shape with reference to the central portion in the tire radial direction between the third intersecting portion P3 and the second intersecting portion P2 similar to the above-mentioned embodiment.
In all of the pneumatic tires of Examples 1 and 2 and Comparative Examples 1 to 5, a distance C between the third intersecting portion P3 and the second intersecting portion P2 in the tire radial direction is 13mm.

Each of these tires is attached to a steerage axle having the weight of 3750kgf, applied with the internal pressure of 825kPa and then this vehicle is made to run 100,000km in the speed of 0 to 80km/h. Afterward, the wear amounts of the widthwise outer and inner edge portions of the shoulder land portion 20a are respectively measured and the difference of the measurement results is calculated for evaluation. The results are indexed to be evaluated with the result of the conventional pneumatic tire not having a groove portion 22 being defined as 100. In this evaluation, the results which are smaller than 100 mean that uneven wear is hard to be generated in comparison with that of the conventional pneumatic tire.
The results are shown in Table 1. It is noted that Conventional Example in Table 1 corresponds to the above-mentioned conventional pneumatic tire.

**[Table 1]**

| **Tire** | **Uneven wear Properties** |
|---|---|
| Conventional Example | 100 |
| Comparative Example 1 | 105 |
| Comparative Example 2 | 101 |
| Comparative Example 3 | 106 |
| Comparative Example 4 | 99 |
| Comparative Example 5 | 99 |
| Example 1 | 96 |
| Example 2 | 94 |

It is apparent from Table 1 that the above-mentioned effect is confirmed in Examples 1 and 2.

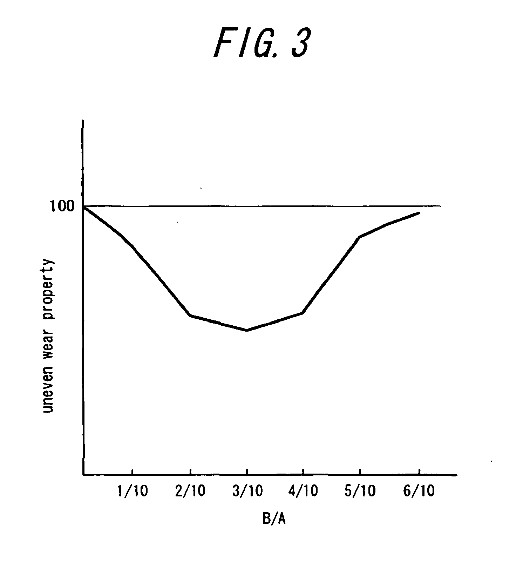

Next, while the ratio B/A of the groove portion of the tire of Example 1 is changed, a similar examination is conducted to measure uneven wear properties. The results are shown in Fig. 3 with a longitudinal axis being uneven wear properties and a traverse axis being the ratio B/A from 1/10 to 6/10 by 1/10.
It is confirmed from Fig. 3 that uneven wear properties are improved when the ratio B/A is within a range between 1/10 and 6/10.

According to the present invention, uneven wear can be surely restrained for a long term.

## Claims

1. A pneumatic tire (10) comprising
a carcass (12) toroidally extending between a pair of beads (11),
a belt layer (13) disposed on an outer side of a crown portion (12a) of the carcass (12) in a tire radial direction, and
a tread portion (14) disposed on an outer side of the belt layer (13) in the tire radial direction, a surface of the tread portion (14) being provided with a plurality of main grooves (19) spaced in a tire width direction and extending in a tire circumferential direction to define land portions at least in both end portions (14a) of the tread portion in the tire width direction, wherein
a groove portion (22) recessed in the tire width direction is formed along the tire circumferential direction on a buttress portion (16) extending inwardly in the tire radial direction from the widthwise end portion of the tread portion (14), the groove portion (22) being situated between a first intersecting portion (P1) where a first virtual line (L1) connecting locations of half depths of plurality of main grooves (19) in the tire width direction intersects with a surface of the buttress portion (16), and a second intersecting portion (P2) where a second virtual line (L2) extending outwardly in the tire width direction from each of both ends (14a) of an innermost belt (13a) in the tire width direction disposed in an innermost side of the belt layer (13) in the tire radial direction intersects with the surface of the buttress portion (16), and
an opening width (A) of the groove portion (22) in the buttress portion (16) is larger than a depth (B) of the groove portion (22); **characterized in that**
the groove portion (22) is formed between the second intersecting portion (P2) and a third intersecting portion (P3) where a third virtual line (L3) connecting bottom surfaces of plurality of main grooves (19a) in the tire width direction intersects with the surface of the buttress portion (16).

2. The pneumatic tire (10) according to claim 1, wherein the groove portion (22) has a single arc shape as viewed in a width section of the tire along the tire width direction.

3. The pneumatic tire (10) according to any one of claim 1 or 2, wherein the groove portion (22) is formed across a central portion in the tire radial direction between the first intersecting portion (P1) and the second intersecting portion (P2).

4. The pneumatic tire (10) according to any one of claims 1 to 3, wherein a groove portion (22) formed on one of the buttress portions (16) has different a shape and/or an arrangement from that of a groove portion (22) provided in the other buttress portion (16).

5. The pneumatic tire (10) according to any one of claims 1 to 3, wherein the groove portion (22) is formed on only one of the buttress portions (16).

6. The pneumatic tire according to any one of claims 1 to 5, wherein the groove portions are formed intermittently in the tire circumferential direction over an entire circumference of the tire.

7. The pneumatic tire (10) according to any one of claims 1 to 6, wherein a ratio B/A is within a range between 1/10 and 5/10, where A is the opening width of the groove portion (22) and B is the depth of the groove portion (22).

## Patentansprüche

1. Luftreifen (10), der aufweist:
eine Karkasse (12), die sich ringförmig zwischen einem Paar von Wülsten (11) erstreckt;
eine Gürtellage (13), die auf einer Außenseite eines Zenitabschnittes (12a) der Karkasse (12) in einer radialen Richtung des Reifens angeordnet ist; und
einen Laufflächenabschnitt (14), der auf einer Außenseite der Gürtellage (13) in der radialen Richtung des Reifens angeordnet ist, wobei eine Fläche des Laufflächenabschnittes (14) mit einer Vielzahl von Hauptrillen (19) versehen ist, die in einer Breitenrichtung des Reifens beabstandet sind und sich in einer Reifenumfangsrichtung erstrecken, um Stegabschnitte mindestens in beiden Endabschnitten (14a) des Laufflächenabschnittes in der Breitenrichtung des Reifens zu definieren, wobei
ein Rillenabschnitt (22), der in der Breitenrichtung des Reifens ausgespart ist, entlang der Reifenumfangsrichtung in einem Stützabschnitt (16) gebildet wird, der sich nach innen in der radialen Richtung des Reifens vom Endabschnitt in der Breitenrichtung des Laufflächenabschnittes (14) erstreckt, wobei der Rillenabschnitt (22) zwischen einem ersten Schnittabschnitt (P1), wo sich eine erste virtuelle Linie (L1), die Stellen mit halber Tiefe der Vielzahl von Hauptrillen (19) in der Breitenrichtung des Reifens verbindet, mit einer Fläche des Stützabschnittes (16) schneidet, und einem zweiten Schnittabschnitt (P2) angeordnet ist, wobei sich eine zweite virtuelle Linie (L2), die sich nach außen in der Breitenrichtung des Reifens von einem jeden der beiden Enden (14a) eines innersten Gürtels (13a) in der Breitenrichtung des Reifens erstreckt, angeordnet in einer innersten Seite der Gürtellage (13) in der radialen Richtung des Reifens, mit der Fläche des Stützabschnittes (16) schneidet, und
eine Öffnungsbreite (A) des Rillenabschnittes (22) im Stützabschnitt (16) größer ist als eine Tiefe (B) des Rillenabschnittes (22); **dadurch gekennzeichnet, dass**
der Rillenabschnitt (22) zwischen dem zweiten Schnittabschnitt (P2) und einem dritten Schnittabschnitt (P3) gebildet wird, wobei sich eine dritte virtuelle Linie (L3), die die Bodenflächen der Vielzahl von Hauptrillen (19a) in der Breitenrichtung des Reifens verbindet, mit der Fläche des Stützabschnittes (16) schneidet.

2. Luftreifen (10) nach Anspruch 1, bei dem der Rillenabschnitt (22) eine einzelne Bogenform aufweist, wenn in einem Breitenschnitt des Reifens längs der Breitenrichtung des Reifens betrachtet wird.

3. Luftreifen (10) nach einem der Ansprüche 1 oder 2, bei dem der Rillenabschnitt (22) über einen mittleren Abschnitt in der radialen Richtung des Reifens zwischen dem ersten Schnittabschnitt (P1) und dem zweiten Schnittabschnitt (P2) gebildet wird.

4. Luftreifen (10) nach einem der Ansprüche 1 bis 3, bei dem ein Rillenabschnitt (22), der in einem der Stützabschnitte (16) gebildet wird, eine unterschiedliche Form und/oder Anordnung von der eines Rillenabschnittes (22) aufweist, der im anderen Stützabschnitt (16) vorhanden ist.

5. Luftreifen (10) nach einem der Ansprüche 1 bis 3, bei dem der Rillenabschnitt (22) in nur einem der Stützabschnitte (16) gebildet wird.

6. Luftreifen (10) nach einem der Ansprüche 1 bis 5, bei dem die Rillenabschnitte diskontinuierlich in der Reifenumfangsrichtung über einen Gesamtumfang des Reifens ausgebildet sind.

7. Luftreifen (10) nach einem der Ansprüche 1 bis 6, bei dem ein Verhältnis B/A innerhalb eines Bereiches von 1/10 und 5/10 liegt, wobei A die Öffnungsbreite des Rillenabschnittes (22) und B die Tiefe des Rillenabschnittes (22) sind.

## Revendications

1. Bandage pneumatique (10), comprenant :
une carcasse (12), s'étendant toroïdalement entre une paire de talons (11) ;
une couche de ceinture (13), agencée sur un côté externe d'une partie de sommet (12a) de la carcasse (12), dans une direction radiale du bandage pneumatique ; et
une partie de bande de roulement (14), agencée sur un côté externe de la couche de ceinture (13), dans la direction radiale du bandage pneumatique, une surface de la partie de bande de roulement (14) comportant plusieurs rainures principales (19), espacées dans la direction de la largeur du bandage pneumatique et s'étendant dans une direction circonférentielle du bandage pneumatique pour définir des parties d'appui, au moins dans les deux parties d'extrémité (14a) de la partie de bande de roulement, dans la direction de la largeur du bandage pneumatique, dans lequel
une partie de rainure (22), évidée dans la direction de la largeur du bandage pneumatique, est formée le long de la direction circonférentielle du bandage pneumatique, sur une partie de contrefort (16) s'étendant vers l'intérieur dans la direction radiale du bandage pneumatique à partir de la partie d'extrémité dans le sens de la largeur de la partie de bande de roulement (14), la partie de rainure (22) étant située entre une première partie d'intersection (P1) au niveau de laquelle une première ligne virtuelle (L1), connectant des emplacements de demi-profondeurs de plusieurs rainures principales (19), dans la direction de la largeur du bandage pneumatique, coupe une surface de la partie de contrefort (16), et une deuxième partie d'intersection (P2), au niveau de laquelle une deuxième ligne virtuelle (L2), s'étendant vers l'extérieur dans la direction de la largeur du bandage pneumatique, à partir de chacune des deux extrémités (14a) d'une ceinture interne extrême (13a) dans la direction de la largeur du bandage pneumatique, agencée sur un côté interne extrême de la couche de ceinture (13), dans la direction radiale du bandage pneumatique, coupe la surface de la partie de contrefort (16) ; et
une largeur d'ouverture (A) de la partie de rainure (22) dans la partie de contrefort (16) étant plus grande qu'une profondeur (B) de la partie de rainure (22) ; **caractérisé en ce que**
la partie de rainure (22) est formée entre la deuxième partie d'intersection (P2) et une troisième partie d'intersection (P3), au niveau de laquelle une troisième ligne virtuelle (L3), connectant des surfaces inférieures de plusieurs rainures principales (19a), dans la direction de la largeur du bandage pneumatique, coupe la surface de la partie de contrefort (16).

2. Bandage pneumatique (10) selon la revendication 1, dans lequel la partie de rainure (22) a la forme d'un arc individuel, vue dans une section de la largeur du bandage pneumatique, le long de la direction de la largeur du bandage pneumatique.

3. Bandage pneumatique (10) selon l'une quelconque des revendications 1 ou 2, dans lequel la partie de rainure (22) est formée à travers une partie centrale, dans la direction radiale du bandage pneumatique, entre la première partie d'intersection (P1) et la deuxième partie d'intersection (P2).

4. Bandage pneumatique (10) selon l'une quelconque des revendications 1 à 3, dans lequel une partie de rainure (22) formée sur une des parties de contrefort (16) a une forme et/ou un agencement différents de ceux d'une partie de rainure (22) formée dans l'autre partie de contrefort (16).

5. Bandage pneumatique (10) selon l'une quelconque des revendications 1 à 3, dans lequel la partie de rainure (22) est formée sur une seule des parties de contrefort (16).

6. Bandage pneumatique selon l'une quelconque des revendications 1 à 5, dans lequel les parties de rainure sont formées par intermittence dans la direction circonférentielle du bandage pneumatique, au-delà d'une circonférence complète du bandage pneumatique.

7. Bandage pneumatique (10) selon l'une quelconque des revendications 1 à 6, dans lequel un rapport B/A est compris dans un intervalle allant de 1/10 à 5/10, A représentant la largeur de l'ouverture de la partie de rainure (22) et B représentant la profondeur de la partie de rainure (22).
